# EUROPÄISCHE PATENTANMELDUNG

(11) **EP 1 350 699 A2**
(43) Veröffentlichungstag der Anmeldung: **08.10.2003**
(21) Anmeldenummer: 02023346.6
(22) Anmeldetag: 18.10.2002
(51) Int. Cl.: B60S 1/34

(54) **Scheibenwischer für Fahrzeugscheiben**

(30) Priorität: 27.03.2002 DE 10213656
(71) Anmelder: ROBERT BOSCH GMBH, 70442 Stuttgart (DE)
(72) Erfinder: Kessler, Peter, 77880 Sasbach (DE)

(57) **Zusammenfassung**

Es wird ein Scheibenwischer für Fahrzeugscheiben angegeben, der ein zur Schwenkbewegung antreibbares Befestigungsteil (11), einen Wischerarm (12), der an seinem einen Ende eine Aufnahme für ein Wischblatt trägt und an seinem anderen Ende mit dem Befestigungsteil (11) über ein Gelenk (14) verbunden ist, und eine Zugfeder (21) aufweist, die einerseits am Wischarm (12) und andererseits am Befestigungsteil (11) festgelegt ist. Zwecks besserer Abstufung der auf den Wischerarm (12) in allen drei Wischerstellungen (I, II, III) wirkenden Federkraft ist die Festlegung der Zugfeder (21) an einem Federende mittels einer zweiten Zugfeder (22) vorgenommen, deren Federkonstante größer ist als die der ersten Zugfeder (21) (Fig. 3).

## Beschreibung

### Stand der Technik

Die Erfindung geht aus von einem Scheibenwischer für Fahrzeugscheiben nach dem Oberbegriff des Anspruchs 1.

Scheibenwischeranlagen in Kraftfahrzeugen weisen einen Scheibenwischer auf, der von einem elektrischen Antriebsmotor über ein Wischergestänge in eine hinund hergehende Schwenkbewegung versetzt wird. Der Scheibenwischer hat einen Wischerarm oder Wischerhebel, der an dem einen Ende eine Aufnahme für ein Wischblatt trägt und an seinem anderen Ende über ein Gelenk mit einem Befestigungsteil verbunden ist. Das Befestigungsteil ist mit einer Abtriebswelle des Antriebsgestänges drehfest verbunden und überträgt somit die Antriebsbewegung auf den Wischerarm, der das Wischblatt über die Fahrzeugscheibe führt. Eine Zugfeder, die einerseits an dem Wischerarm und andererseits an dem Befestigungsteil festgelegt ist, erzeugt eine das Wischblatt mit seiner Wischleiste gegen die Fahrzeugscheibe andrückende Anpreßkraft. Das Gelenk erlaubt außerdem das Abschwenken des Wischerarms mit Wischblatt von der Fahrzeugscheibe, wobei die Zugfeder in eine Übertotpunktlage gebracht wird.

### Vorteile der Erfindung

Der erfindungsgemäße Scheibenwischer mit den Merkmalen des Anspruchs 1 hat den Vorteil, daß durch die erfindungsgemäße Überlagerung der Federkennlinie der Zugfeder und der Federkennlinie des damit in Reihe geschalteten, vorzugsweise ebenfalls als Zugfeder ausgebildeten, elastischen Elements eine bessere Abstufung der auf den Wischerarm wirkenden Federkraft erreicht wird, und zwar in allen drei Wischerarmstellungen, wie Anlieferstellung, Arbeitsstellung mit Kraftauflage des Wischblatts auf der Fahrzeugscheibe und Abklappstellung mit von der Fahrzeugscheibe abgehobenem Wischblatt. Unter Anlieferstellung wird dabei die Lage des Wischerarms relativ zum Befestigungsteil bei nicht am Fahrzeug montierten, also in der Anlieferung sich befindlichen Scheibenwischer verstanden, in der der Wischerarm unter reduzierter Zugkraft der Zugfeder an einem Anschlag am Befestigungsteil anliegt. Mit dem erfindungsgemäßen Federsystem kann insbesondere die für die Arbeitsstellung des Wischerarms vorgegebene Anpreßkraft des Wischblatts an der Fahrzeugscheibe mit einem sehr viel kleineren Toleranzbereich eingehalten werden. Zudem läßt sich die Forderung nach genauen Federkräften für die Anliefer- und Abklappstellung des Wischerarms besser erfüllen.

Durch die in den weiteren Ansprüchen aufgeführten Maßnahmen sind vorteilhafte Weiterbildungen und Verbesserungen des im Anspruch 1 angegebenen Scheibenwischers möglich.,

Gemäß einer bevorzugten Ausführungsform der Erfindung ist eine das federelastische Element bildende, zweite Zugfeder mit ihrem einen Federende in die erste Zugfeder und mit ihrem anderen Federende am Befestigungsteil eingehängt. Die zweite Zugfeder ist dabei vorzugsweise als Stielösenfeder mit einem C-förmigen Stiel ausgebildet, durch den die im Federzug liegende Gelenkachse des Gelenks zwischen Wischerarm und Befestigungsteil umgangen wird.

### Zeichnung

Die Erfindung ist anhand eines in der Zeichnung dargestellten Ausführungsbeispiels in der nachfolgenden Beschreibung näher erläutert. Es zeigen:
- Fig. 1: eine Seitenansicht eines Scheibenwischers ohne Wischblatt,
- Fig. 2: eine Unteransicht des Scheibenwischers in Fig. 1,
- Fig. 3: ausschnittweise eine vergrößerte Seitenansicht des Scheibenwischers mit drei verschiedenen Stellungen des im Längsschnitt dargestellten Wischerarms.

### Beschreibung des Ausführungsbeispiels

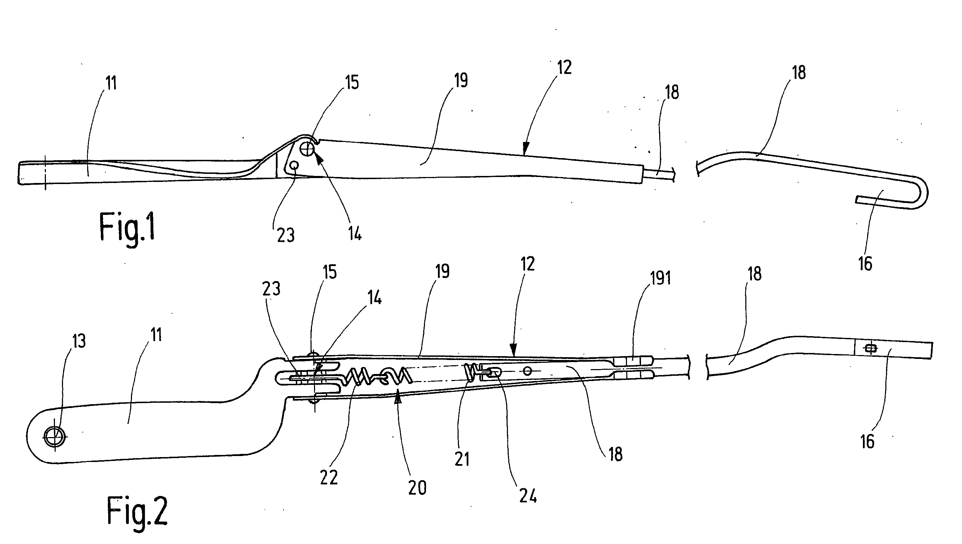

Der in Fig. 1 und 2 in zwei verschiedenen Ansichten ohne Wischblatt dargestellte Scheibenwischer weist ein Befestigungsteil 11 und einen Wischerarm 12 auf. Wie hier nicht weiter dargestellt ist, ist das Befestigungsteil 11 mittels einer Buchse 13 drehfest auf einer Abtriebswelle eines Wischergestänges aufgesteckt, so daß es bei Einschalten des Wischermotors in eine hin- und hergehende Schwenkbewegung versetzt wird. Bei einer Ausbildung des Wischergestänges als Viergelenk-oder Parallelogramm-Gestänge bildet das Befestigungsteil eine zwei Schwenkarme gelenkig verbindende Koppel. Der Wischerarm 12 ist über ein einen Freiheitsgrad aufweisendes Gelenk 14 mit in Schwenkrichtung des Befestigungsteils 11 weisender bzw. quer zur Längsrichtung des Wischerarms 12 ausgerichteter Gelenkachse an dem Befestigungsteil 11 so angelenkt, daß er in Schwenkrichtung des Befestigungsteils 11 von diesem starr mitgenommen wird und sich quer zu der Schwenkrichtung bzw. in Richtung der Normalen der Schwenkebene des Befestigungsteils 11 gegenüber dem Befestigungsteil 11 verschwenken läßt. Das Gelenk 14 wird mittels eines Gelenkbolzens 15 realisiert, der durch entsprechende Bohrungen im Befestigungsteil 11 und Wischerarm 12 hindurchgesteckt und verstemmt ist. An dem vom Befestigungsteil 11 abgekehrten Ende trägt der Wischerarm 12 eine hakenförmige Aufnahme 16, in die ein das hier nicht dargestellte Wischblatt gelenkig aufnehmendes Klemmstück eingeschoben werden kann. Die hakenförmige Aufnahme 16 ist einstückig am Ende einer Wischstange 18 abgebogen, die mit ihrem anderen Ende in einen das Gelenk 14 aufnehmenden Gelenkteil 19 des Wischerarms 12 eingesetzt und durch Crimpen mit dem Gelenkteil 19 kraft- und formschlüssig verbunden ist. Der Crimpbereich des Gelenkteils 19 ist in Fig. 2 mit 191 gekennzeichnet.

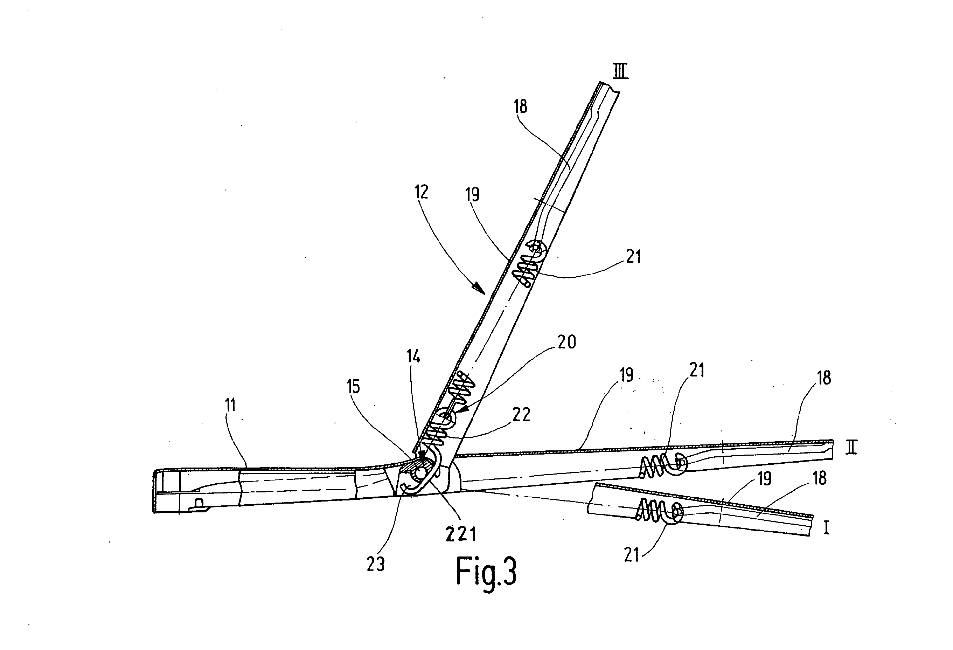

Zur Erzeugung einer Vorspannung am Wischerarm 12 derart, daß das von ihm getragene Wischblatt mit einem gewünschten Anpreßdruck auf der Fahrzeugscheibe aufliegt, ist ein Federsystem 20, gebildet aus einer Zugfeder 21 und einem federelastischen Element größerer Federhärte, insbesondere Federkonstante, vorgesehen, das einerseits am Befestigungsteil 11 und andererseits am Wischerarm 12 angreift. Die erste Zugfeder 21 ist dabei als normale Schraubenfeder und das federelastische Element als zweite Zugfeder 22 in Form einer Stielösenfeder mit einem C-förmigen Stiel 221 (Fig. 3) ausgebildet. Die beiden Zugfedern 21, 22 sind dabei mit einem Ende ineinander eingehängt. Das freie Stielende der zweiten Zugfeder 22 ist in einen im Befestigungsteil 11 gehaltenen Nietstift 23 und das freie Ende der ersten Zugfeder 21 in eine in der Wischstange 18 vorhandene Öffnung 24 eingehängt. Der Stiel 221 der zweiten Zugfeder 22 ist dabei so angeordnet, daß seine C-förmige Öffnung zu dem das Gelenk 14 bildende Gelenkbolzen 15 weist, so daß mit dem Stiel 221 der Gelenkbolzen 15 umgangen werden kann. Die Zugfedern 21, 22 sind so ausgelegt, daß die zweite Zugfeder 22 eine größere Federkonstante aufweist als die erste Zugfeder 21. Durch die Überlagerung der zwei unterschiedlichen Federkennlinien ist eine bessere Abstufung der an dem Wischerarm 12 angreifenden Federkraft möglich. Durch Veränderung der inneren Vorspannung der beiden Zugfedern 21, 22 können die Kennlinien der beiden Zugfedern 21, 22 weiter optimiert werden.

In Fig. 3 ist ausschnittweise der Wischerarm 12 im Längsschnitt in drei verschiedenen Schwenkstellungen I, II und III dargestellt. Die Schwenkstellung I nimmt der Wischerarm 12 unter der Vorspannung des Federsystems 20 bei Anlieferung, also bei noch nicht in das Fahrzeug eingesetztem Scheibenwischer, ein. Dabei liegt der Wischerarm 12 an einem am Befestigungsteil 11 ausgebildeten, hier nicht dargestellten Anschlag an, so daß eine ungewollte Demontage des Scheibenwischers durch Aushängen des Federsystems 20 verhindert wird.

Die Stellung II stellt die Arbeitsstellung des Wischerarms 12 dar, in welcher er mit einer vorgegebenen Anpreßkraft, die durch entsprechende Einstellung des Federsystems 20 gewonnen wird, das Wischblatt auf die Fahrzeugscheibe aufdrückt.

Die Stellung III ist die Abklappstellung des Wischerarms 12, in welcher er zusammen mit dem Wischblatt von der Fahrzeugscheibe abgehoben ist. Das Federsystem 20 befindet sich dabei in seiner Übertotpunktlage, so daß ein selbsttätiges Zurückklappen des Wischerarms 12 zuverlässig verhindert ist.

Durch das erfindungsgemäß ausgelegte Federsystem 20 können die Kräfte, die den Wischerarm 12 in seiner Abklappstellung III halten, den Wischerarm 12 in seiner Arbeitsstellung II gegen die Fahrzeugscheibe pressen und den Wischerarm 12 in seiner Anlieferstellung I gegen den befestigungsteilseitigen Anschlag drücken, recht genau eingestellt werden.

In dem beschriebenen Federsystem 20 kann die zweite Zugfeder 22 auch durch ein anderes federelastisches Element, z.B. durch einen Federbügel, ersetzt werden.

## Patentansprüche

1. Scheibenwischer für Fahrzeugscheiben, mit einem zur Schwenkbewegung antreibbaren Befestigungsteil (11), mit einem Wischerarm (12), der an seinem einen Ende eine Aufnahme (16) für ein Wischblatt trägt und an seinem anderen Ende mit dem Befestigungsteil (11) über ein Gelenk (14) mit in Schwenkrichtung des Befestigungsteil (11) weisender Gelenkachse verbunden ist, und mit einer Zugfeder (21), die einerseits am Wischerarm (12) und andererseits am Befestigungsteil (11) festgelegt ist, **dadurch gekennzeichnet, daß** die Festlegung der Zugfeder (21) an ihrem einen Federende mittels eines federelastischen Elements vorgenommen ist, das eine gegenüber der Zugfeder (21) größere Federhärte aufweist.

2. Scheibenwischer nach Anspruch 1, **dadurch gekennzeichnet, daß** das federelastische Element als zweite Zugfeder (22) ausgebildet ist.

3. Scheibenwischer nach Anspruch 2, **dadurch gekennzeichnet, daß** die zweite Zugfeder (22) mit ihrem einen Federende in der ersten Zugfeder (21) und mit ihrem anderen Federende am Befestigungsteil (11) eingehängt ist.

4. Scheibenwischer nach Anspruch 3, **dadurch gekennzeichnet, daß** die zweite Zugfeder (22) als Stielösenfeder mit einem C-förmigen Stiel ausgebildet ist.

5. Scheibenwischer nach Anspruch 4, **dadurch gekennzeichnet, daß** die Stielösenfeder (22) mit ihrem freien Stielende im Befestigungsteil (11), vorzugsweise an einem mit dem Befestigungsteil (11) starr verbundenen, parallel zur Gelenkachse des Gelenks (14) angeordneten Nietstift (23), so aufgehängt ist, daß die C-Öffnung des Stiels zur Gelenkachse weist.

6. Scheibenwischer nach einem der Ansprüche 1 - 5, **dadurch gekennzeichnet, daß** die Festlegung der ersten Zugfeder (21) am Wischerarm (12) an einer Wischstange (18) vorgenommen ist, auf die ein das Gelenk (14) aufnehmendes Gelenkteil (19) aufgecrimpt ist.
